# EUROPÄISCHE PATENTSCHRIFT

(11) **EP 1 688 118 B1**
(45) Veröffentlichungstag und Bekanntmachung des Hinweises auf die Patenterteilung: **22.08.2007**
(21) Anmeldenummer: 05002115.3
(22) Anmeldetag: 02.02.2005
(51) Int. Cl.: A61H 1/00, A47C 21/00, B60N 2/44

(54) **Verfahren zur Verhinderung von Blutstasen**
Method for avoiding blood stases
Méthode pour éviter des stases sanguines

(43) Veröffentlichungstag der Anmeldung: 09.08.2006
(73) Patentinhaber: IBFK GmbH International Biotechnological Future Knowledge, 47804 Krefeld (DE)
(72) Erfinder: Katsuta, Jiro, 47804 Krefeld (DE)
(74) Vertreter: Paul, Dieter-Alfred

(56) Entgegenhaltungen:
- WO-A-02/091883
- DE-A1- 10 304 494
- US-A- 2 235 183
- US-A- 3 064 642
- US-A1- 2002 107 458

## Beschreibung

Die vorliegende Erfindung betrifft ein Sitzmöbel nach dem Oberbegriff von Anspruch 1.

Auf längeren Reisen mit dem Auto, dem Bus oder dem Flugzeug tritt sehr häufig das Problem auf, daß die Beine nur unzureichend durchblutet werden und es zu sogenannten Blutstasen kommt. Die Ursache hierfür liegt darin, daß bei einer sitzenden Person nahezu das gesamte Körpergewicht auf den Oberschenkeln lastet mit der Folge, daß das Hautgewebe und die Gefäße in den Oberschenkelbereichen, die mit dem Fahrzeugsitz in Kontakt kommen, einem hohen Druck ausgesetzt sind, der eine weitere Blutzirkulation unterbindet. Als Resultat stellt sich ein Taubheitsgefühl in den Beinen ein und es besteht bei längeren Flugreisen sogar das Risiko von Embolien.

Aus der US 2002/0107458 A1 ist ein Fahrzeugsitz bekannt, der mit Vibrationseinrichtungen ausgestattet ist, um eine sitzende Person während des Fahrens zu massieren. Solche Massagen sind für den Fahrer zwar angenehm, jedoch nicht oder nicht zufriedenstellend geeignet, die Durchblutung anzuregen.

Ein Sitzmöbel mit Vibrationseinrichtung und Vibrationsplatten ist ferner aus der US-A-2,235,183 bekannt.

Es ist daher die Aufgabe der vorliegenden Erfindung, ein Sitzmöbel bereitzustellen, mit dem die Durchblutung bei sitzenden Personen weiter verbessert werden kann.

Diese Aufgabe ist erfindungsgemäß bei einem Sitzmöbel der eingangsgenannten Art durch die kennzeichnenden Merkmale von Anspruch 1 gelöst. Der Erfindung liegt damit die Überlegung zugrunde, gezielt in die Oberschenkelbereiche einer sitzenden Person, in denen die größten Druckkräfte auftreten und damit die Gefahr von Blutstasen besteht, Schwingungen mit einer gewünschten Frequenz und Amplitude einzukoppeln. Die Schwingungen haben dabei zur Folge, daß der Körper in diesen Auflagebereichen abwechselnd angehoben und abgesenkt wird, wobei während der Absenkbewegung eine kurzzeitige Druckentlastung auftritt, so daß eine Blutzirkulation stattfinden kann. Des weiteren bewirken die Vibrationen eine Art Pumpeffekt, der die Blutzirkulation anregt.

In bevorzugter Weise werden die Schwingungen zyklisch erzeugt, da ein dauerhaftes Vibrieren als unangenehm empfunden wird. Es hat sich gezeigt, daß die Einleitung von Schwingungen in mehreren Zyklen, die jeweils weniger als eine Minute, beispielsweise ca. 30 Sekunden betragen können, völlig ausreichend sind. Wenn mehrere Schwingungszyklen nacheinander durchgeführt werden, ist es zweckmäßig, zunächst mit einer geringeren Schwingungsintensität zu beginnen und dann die Intensität von Zyklus zu Zyklus zu steigern. Auf diese Weise wird vermieden, daß sich beispielsweise ein Autofahrer beim Einsetzen der Vibrationen erschreckt.

Versuche haben gezeigt, daß eine gute Wirkung erzielt wird, wenn die Schwingungen in einem Frequenzbereich von 5 bis 30 Hz und insbesondere 20 bis 30 Hz liegen und eine Amplitude von 0,5 bis 2 mm und insbesondere 1 bis 2 mm besitzen.

Grundsätzlich ist es möglich, die beiden vibrationsplatten über einen gemeinsamen Schwingungserzeuger anzuregen. In bevorzugter Weise ist den beiden Vibrationsplatten jeweils ein eigener Schwingungserzeuger zugeordnet, wobei die Schwingungserzeuger derart aufeinander abgestimmt sind, daß sie die Vibrationsplatten alternierend und gegensinnig anregen.

Versuche haben gezeigt, daß ein optimaler Effekt erzielt wird, wenn die vibrationsplatten alternierend und gegensinnig bewegt werden. Grundsätzlich wäre es aber auch möglich, die vibrationsplatten parallel zueinander und gleichphasig in Schwingungen zu versetzen.

Gemäß einer bevorzugten Ausführungsform weist die Vibrationseinrichtung ein Gehäuse oder einen Rahmen auf, an welchem die Vibrationsplatten gehalten und an ihrer von der Sitzfläche wegweisenden Seite abgestützt sind. Die Abstützung kann beispielsweise durch ein Hdrauliksystem erfolgen, wobei vorzugsweise die Abstützdrücke an den Abstützstellen unabhängig voneinander einstellbar sind, so daß die Vibrationsplatten durch entsprechende Beaufschlagung der einzelnen Abstützstellen angehoben, abgesenkt und gekippt werden können mit der Folge, daß sich eine gewünschte Soll-Lage der Vibrationsplatten unabhängig von der Druckbelastung durch eine auf dem Möbel sitzenden oder liegenden Person einstellen läßt. Dabei erfolgt zweckmäßigerweise eine automatische Regelung des Hydrauliksystems dahingehend, daß die Vibrationsplatten eine vorgegebene Ausgangslage einnehmen, bevor sie in Schwingungen versetzt werden.

Um bei den vorbeschriebenen Sitzmöbeln Schwingungen zu erzeugen, ist gemäß einem Ausführungsbeispiel vorgesehen, daß in dem eine Schwingungsmasse geführt ist, die mit den Vibrationsplatten gekoppelt ist und über Anregungsmittel in Schwingungen versetzt werden kann.

Zur Berücksichtigung variabler Parameter wie beispielsweise der Masse der das Möbel benutzenden Person können die Schwingungsmasse und die Vibrationsplatten derart miteinander gekoppelt sein, daß das Verhältnis ihrer Schwingungsamplituden zueinander einstellbar ist. Dadurch kann eine Anpassung der Amplitude der Zwischenmasse an das Gewicht der Person erfolgen. Beträgt das abzustützende Gewicht der Person beispielsweise 40 kg und das Gewicht der Zwischenmasse 8 kg, so ist nach dem Impulserhaltungssatz eine Kopplung wünschenswert, die ein Schwingungsverhältnis von Zwischenmasse zu den Vibrationsplatten von 5:1 ermöglicht. Beispielsweise kann die Anregung der Schwingungsmasse und/oder die Kopplung der Schwingungsmasse mit den Vibrationsplatten über Tauchspulsysteme erfolgen.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt
- Figur 1: eine Schnittansicht eines erfindungsgemäßen Sitzmöbels mit einer darauf sitzenden Person,
- Figur 2: in vergrößerter Darstellung den Sitzkörper des Sitzmöbels aus Figur 1,
- Figur 3: den Sitzkörper aus Figur 2 in Draufsicht,
- Figur 4: die Vibrationseinrichtung des Sitzmöbels aus Figur 3 in Draufsicht, und
- Figur 5: ein Diagramm, in welchem die zyklische Schwingungseinkopplung gemäß einem Verfahren der vorliegenden Erfindung dargestellt ist.

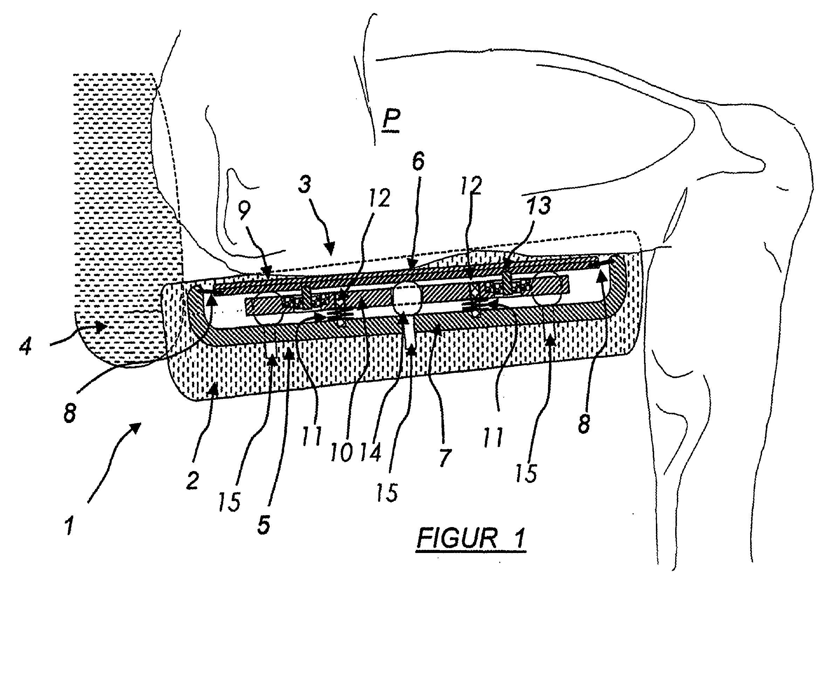

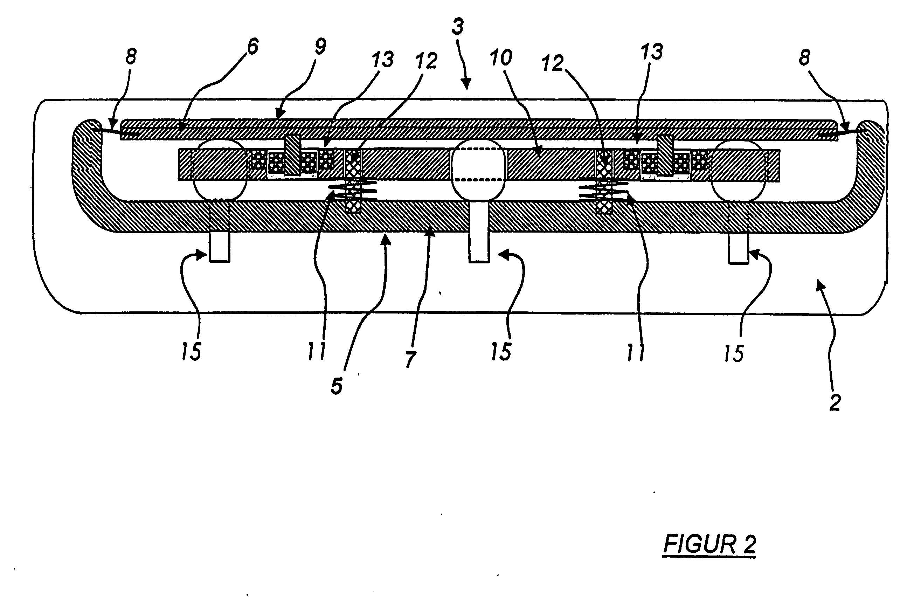

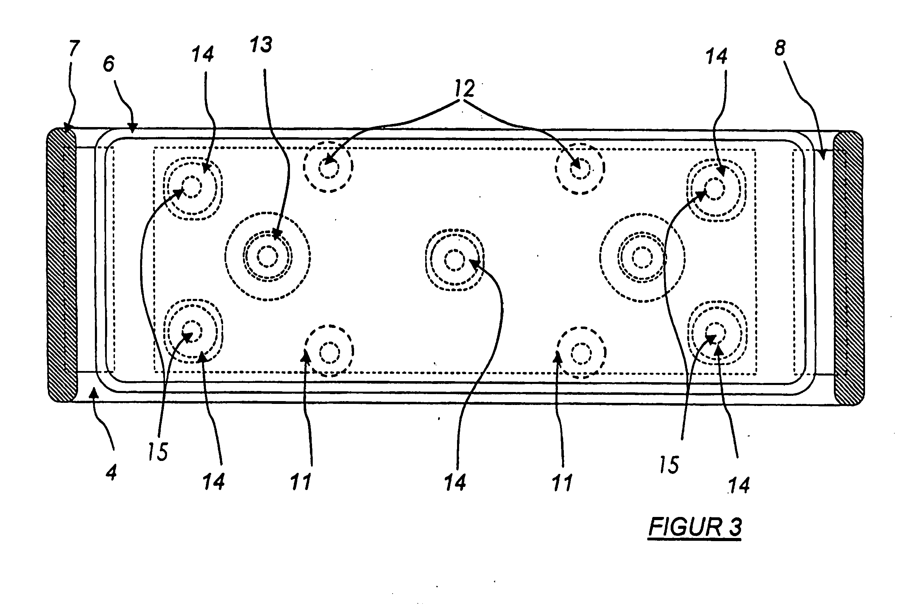

Die Figuren 1 bis 4 zeigen ein Sitzmöbel gemäß der vorliegenden Erfindung, das hier als Fahrzeugsitz 1 für einen PKW, ein Flugzeug o. dgl. verwendet werden kann. Der Fahrzeugsitz 1 besitzt einen Sitzkörper 2, der an seiner Oberseite eine Sitzfläche 3 aufweist, sowie eine Rückenlehne 4. In dem Sitzkörper 2 sind zwei Vibrationseinrichtungen 5 vorgesehen, die dazu dienen, Schwingungen in die Oberschenkel einer auf dem Sitz sitzenden Person P einzukoppeln. Die Vibrationseinrichtungen 5 besitzen jeweils eine längliche Vibrationsplatte 6, die an einem Rahmen oder Gehäuse 7 der vibrationseinrichtung 5 über Blattfedern 8 aufgehängt ist und an ihrer zur Sitzfläche 3 weisenden Oberseite mit einer Gelauflage 9 versehen ist.

In dem Gehäuse 7 ist ein Schwingungserzeuger untergebracht, um die Vibrationsplatte 6 in Schwingungen zu versetzen. Dieser Schwingungserzeuger umfaßt eine Schwingungsasse 10, die an dem Gehäuse 7 über Federn 11 abgestützt und an Führungsstiften 12, welche die Federn 11 durchgreifen, quer zur Ebene der Vibrationsplatte 6, d.h. zu der Sitzfläche 3 hin und von dieser weg, bewegbar geführt ist. Die Schwingungsmasse 10 ist mit der Vibrationsplatte 6 über ein Tauchspulsystem 13 gekoppelt, welches bei Erregung die Vibrationsplatte 6 und die Schwingungsmasse 10 in Schwingungen versetzt, deren Frequenz und Amplitude über ein Steuergerät einstellbar sind.

Die Vibrationsplatte 6 ist zusätzlich in dem Gehäuse 7 an ihrer von der Sitzfläche 3 wegweisenden Unterseite abgestützt. Konkret erfolgt die Abstützung über fünf mit Hydraulikmitteln gefüllte Ballone 14, die in den vier Ekkenbereichen und im Zentrum der rechteckigen Vibrationsplatte 6 positioniert sind, um die Vibrationsplatte 6 gleichmäßig abzustützen. Die Ballone 14 sind über Stutzen 15 an ein Hydraulikmittelsystem angeschlossen, über welches ihnen je nach Bedarf Hydraulikflüssigkeit zugeführt oder entnommen werden kann. Da die auf die Vibrationsplatte 6 von der den Sitz benutzenden Person P ausgeübten Druck von der Sitzvorderseite zur Sitzrückseite hin ungleichmäßig verteilt sind, ist das Hydrauliksystem so ausgelegt, daß die Ballone 14 einzeln oder paarweise angesteuert werden können, um ihnen Hydraulikflüssigkeit zuzuführen oder zu entnehmen. In der Zeichnung nicht erkennbar ist, daß ein automatisches Regelsystem vorgesehen ist, welches die Position und Lage der vibrationsplatte 6 erfaßt und den Ballonen 14 Hydraulikmittel in der Weise zuführt oder entnimmt, daß die Vibrationsplatte 6 eine gewünschte Solllage einnimmt. Auf diese Weise wird gewährleistet, daß die Vibrationsplatte 6 eine gewünschte Ausgangslage unabhängig von dem Gewicht und der Figur der Person P einnimmt. Das Regelsystem stellt auch sicher, daß die Position der Vibrationsplatte 6 nachjustiert wird, wenn die Person P ihre Sitzposition verändert.

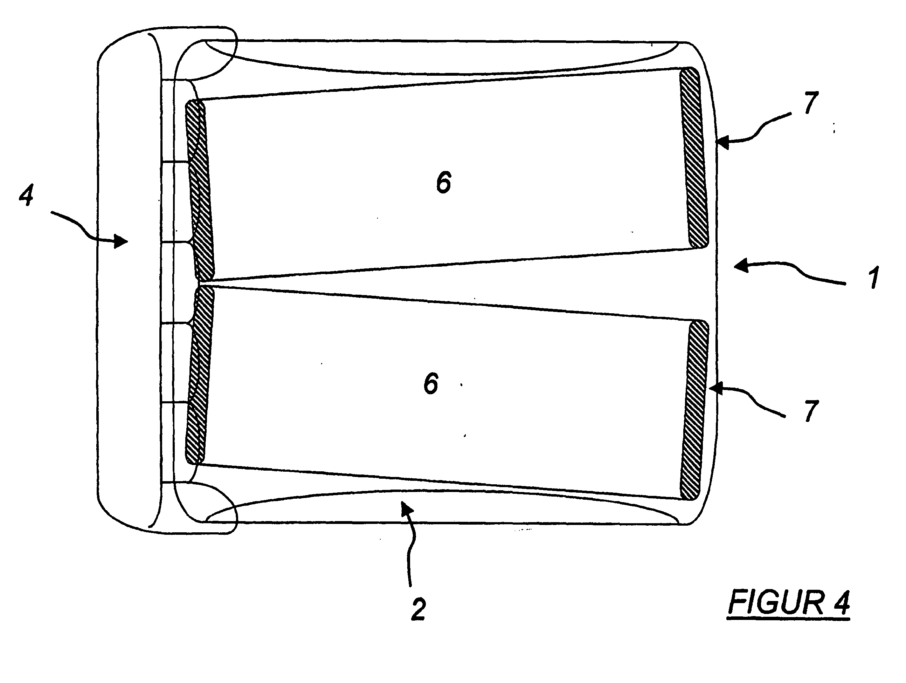

Die beiden vibrationseinrichtungen 5 sind, wie insbesondere die Figur 4 gut erkennen läßt, leicht V-förmig derart angeordnet, daß die Vibrationsplatten 6 von der Rückseite zur vorderseite des Sitzes 1 leicht auseinanderlaufen, so daß die Oberschenkel der Person P bei üblicher Sitzweise auf den vibrationsplatten 6 positioniert sind.

Die Vibrationseinrichtungen 5 bilden zwar baulich separate Einheiten, ihre Schwingungserzeuger sind jedoch derart aufeinander abgestimmt, daß die Vibrationsplatten 6 bei einer Betätigung alternierend und gegensinnig angeregt werden, um Schwingungen über die Vibrationsplatten 6 in die Oberschenkel der auf dem Sitz 1 sitzenden Person P mit einer gewünschten Frequenz und Amplitude einzukoppeln. Die Schwingungen der vibrationsplatte 6 haben dabei zur Folge, daß der Oberschenkel bei einer Aufwärtsbewegung der Vibrationsplatte 6 angehoben und bei der anschließenden Absenkbewegung der vibrationsplatte 6 kurzzeitig druckentlastet wird, so daß eine Blutzirkulation stattfinden kann. Desweiteren bewirken die Vibrationen eine Art Pumpeffekt, der die Blutzirkulation anregt.

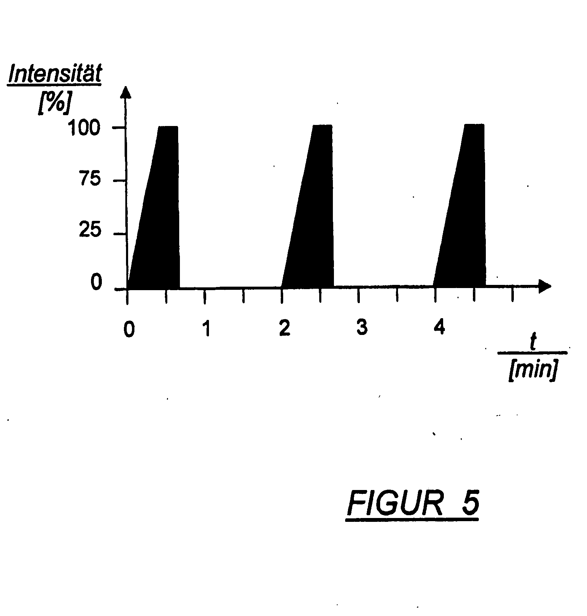

Wie die Figur 5 zeigt, erfolgt bei automatischem Betrieb die Einkopplung der Schwingungen in drei Applikationszyklen, die jeweils etwa 40 Sekunden dauern, wobei die Schwingungsintensität zu Beginn eines jeden Zyklus kontinuierlich auf einen vorgegebenen Sollwert gesteigert wird. In den dargestellten Ausführungsbeispielen ist die maximale Intensität in allen drei Applikationszyklen gleich. Es besteht jedoch auch die Möglichkeit, die Intensität von Zyklus zu Zyklus zu steigern. Selbstverständlich ist es auch möglich, die Vibrationseinrichtungen individuell von Hand einzustellen und zu schalten. Versuche haben gezeigt, daß gute Ergebnisse erzielt werden, wenn Schwingungen mit einer Frequenz von 5 bis 30 Hz und insbesondere 20 bis 30 Hz sowie mit einer Amplitude von 0,5 bis 2 mm, insbesondere von 1 bis 2 mm in den Körper eingekoppelt werden.

Schließlich ist es möglich, auch den Füßen Vibrationseinrichtungen zuzuordnen, die beispielsweise in den Fahrzeugboden integriert sein können.

## Patentansprüche

1. Sitzmöbel, insbesondere für Fahrzeuge und Flugzeuge, mit einem Sitzkörper (2), der eine Sitzfläche (3) bildet, und gegebenenfalls einer Rückenlehne (4), wobei in dem Sitzkörper (2) unterhalb der Oberschenkelauflagebereiche der Sitzfläche (3) eine Vibrationseinrichtung (5) vorgesehen ist, um Schwingungen in die Oberschenkel einer auf dem Sitzmöbel (1) sitzenden Person (P) einzukoppeln, **dadurch gekennzeichnet, daß** die Vibrationseinrichtung (5) zwei nebeneinanderliegende Vibrationsplatten (6) aufweist, die mittels eines Schwingungserzeugers in Schwingungen versetzt werden können und V-förmig zur Sitzvorderseite auseinanderlaufend angeordnet sind.

2. Sitzmöbel nach Anspruch 1, **dadurch gekennzeichnet, daß** die Vibrationsplatten (6) mittels eines Schwingungserzeugers alternierend und insbesondere gegenläufig in Schwingungen versetzt werden.

3. Sitzmöbel nach Anspruch 1 oder 2, **dadurch gekennzeichnet, daß** den beiden Vibrationsplatten (6) jeweils ein Schwingungserzeuger zugeordnet ist, wobei die Schwingungserzeuger derart aufeinander abgestimmt sind, daß sie die Vibrationsplatten (6) alternierend und gegensinnig anregen.

4. Sitzmöbel nach einem der vorhergehenden Ansprüche, **dadurch gekennzeichnet, daß** die Vibrationseinrichtung (5) Schwingungen mit einer Frequenz von 5 bis 30 Hz, insbesondere 20 bis 30 Hz erzeugt.

5. Sitzmöbel nach einem der vorherigen Ansprüche, **dadurch gekennzeichnet, daß** die Vibrationsplatten (6) in einem Gehäuse (7) der Vibrationseinrichtung federnd aufgehängt sind.

6. Sitzmöbel nach Anspruch 5, **dadurch gekennzeichnet, daß** die Vibrationsplatten (6) an ihrer von der Sitzfläche wegweisenden Unterseite in dem Gehäuse (7) abgestützt sind.

7. Sitzmöbel nach Anspruch 6, **dadurch gekennzeichnet, daß** die Vibrationsplatten (6) an dem Gehäuse (7) hydraulisch abgestützt sind.

8. Sitzmöbel nach Anspruch 7, **dadurch gekennzeichnet, daß** die Vibrationsplatten (6) an mehreren Stellen hydraulisch abgestützt sind, wobei der Abstützdruck der Hydraulik an den Stützstellen (14) separat einstellbar ist.

9. Sitzmöbel nach einem der vorherigen Ansprüche, **dadurch gekennzeichnet, daß** an den zur Auflagefläche weisenden Seiten der Vibrationsplatten (6) eine Gelauflage (9) vorgesehen ist.

10. Sitzmöbel nach einem der Ansprüche 5 bis 9, **dadurch gekennzeichnet, daß** in dem Gehäuse (7) der Vibrationseinrichtung (5) eine Schwingungsmasse (10) geführt ist, die mit der Vibrationsplatte (6) gekoppelt ist und über Anregungsmittel in Schwingungen versetzt werden kann.

11. Sitzmöbel nach Anspruch 10, **dadurch gekennzeichnet, daß** die Schwingungsmasse (10) und die Vibrationsplatten (6) derart miteinander gekoppelt sind, daß das Verhältnis ihrer Schwingungsamplituden zueinander einstellbar ist.

12. Sitzmöbel nach Anspruch 10 oder 11, **dadurch gekennzeichnet, daß** die Anregung der Schwingungsmasse (10) und/oder die Kopplung der Schwingungsmasse (10) mit der Vibrationsplatten (6) über Tauchspulsysteme erfolgt.

## Claims

1. A seat, in particular for vehicles and aeroplanes, with a seat body (2) which forms a sitting surface (3), and if required a back-rest (4), wherein a vibration device (5) is provided in the seat body (2) beneath the thigh support regions of the sitting surface (3) in order to release vibrations into the thighs of a pe r-son (P) sitting on the seat (1), **characterized in that** the vibration device comprises two adjacent vibration plates (6), that can be caused to vibrate by means of a vibration producer and are disposed in an approximate V-shape extending a part from one another towards the front side of the seat.

2. The seat according to claim 1, **characterized in that** the vibration plates (6) can be caused to vibrate alternately and in particular in opposite dire ctions.

3. The seat according to claim 1 or 2, **characterized in that** a vibration producer is allocated to each of the two vibration plates (6), the vibration pr o-ducers being co-ordinated with one another so that they stimulate the vibr a-tion plates (6) alternately and in opposite direction.

4. The seat according to any of the preceeding claims, **characterized in that** the vibration device (5) produces vibrations with a frequency of 5 to 30 Hz, in particular 20 to 30 Hz.

5. The seat according to any preceeding claim, **characterised in that** the vibration plates (6) are suspended resiliently in a housing (7) of the vibration d e-vice.

6. The seat according to claim 5, **characterized in that** the vibration plates (6) are supported in the housing (7) on their lower side facing away from the sitting surface.

7. The seat according to claim 6, **characterized in that** the vibration plates (6) are hydraulically supported on the housing (7).

8. The seat according to claim 7, **characterized in that** the vibration plates (6) are hydraulically supported at several points, the support pressure of the h y-draulics being separately adjustable at the support points (14).

9. The seat according to any of the preceeding claims, **characterized in that** a gel support (9) is provided on the sides of the vibration plates (6) facing the support surface.

10. The seat according to any of claims 5 to 9, **characterised in that** a vibration mass (10) is guided in the housing (7) of the vibration device (5) which is coupled to the vibration plate (6) and can be caused to vibrate by stimulation means.

11. The seat according to claim 10, **characterized in that** the vibration mass (10) and the vibration plates (6) are coupled to one another in such a way that the ratio of their vibration amplitudes to one another is adjustable.

12. The seat according to claim 10 or 11, **characterized in that** the stimulation of the vibration mass (10) and/or the coupling of the vibration mass (10) to the vibration plates (6) is achieved by means of plunger coil systems.

## Revendications

1. Mobilier de siège, en particulier pour des véhicules moteurs et des avions, avec un corps de siège (2) qui forme une surface de siège (3), et le cas échéant avec un do s-sier (4), où dans le corps de siège (2), sous les zones de position des cuisses de la surface de siège (3), est prévu un dispositif vibrateur (5) pour transmettre des vibr a-tions dans les cuisses d'une personne (P) assise sur le mobilier de siège (1), **caractérisé en ce que,** le dispositif vibrateur (5) présente deux plaques vibrantes (6) mises à côté, qui par l'intermédiaire d'un générateur de vibrations peuvent être amenées en état de vibration et qui sont disposées en forme de V, en divergeant vers le devant de la chaise.

2. Mobilier de siège selon la revendication 1, **caractérisé en ce que**, par l'intermédiaire d'un générateur de vibrations, les plaques vibrantes (6) sont amenées en état de vibration de manière alternative et spécialement en sens contraire.

3. Mobilier de siège selon la revendication 1 ou 2, **caractérisé en ce que**, aux deux plaques vibrantes (6) est disposé à raison d'un générateur de vibrations, où les générateurs de vibrations sont ainsi synchronisés de sorte que ceux-ci actionnent les plaques vibrantes (6) de manière alternative et en sens contraire.

4. Mobilier de siège selon l'une des revendications antérieures, **caractérisé en ce que**, le dispositif vibrateur (5) génère des vibrations avec une fréquence de 5 à 30 Hz, spécialement de 20 à 30Hz.

5. Mobilier de siège selon l'une des revendications antérieures, **caractérisé en ce que**, les plaques vibrantes (6) sont suspendues de manière élastique dans un boîtier (7) du dispositif vibrateur.

6. Mobilier de siège selon la revendication 5, **caractérisé en ce que**, sur leur partie inférieure, opposée à l'égard de la surface de siège, les plaques vibrantes (6) s'appuient du boîtier (7).

7. Mobilier de siège selon la revendication 6, **caractérisé en ce que**, les plaques v i-brantes (6) s'appuient de manière hydraulique du boîtier (7).

8. Mobilier de siège selon la revendication 7, **caractérisé en ce que**, les plaques v i-brantes (6) s'appuient de manière hydraulique en plusieurs points, où la pression d'appui du système hydraulique peut être réglée séparément dans les points d'appui (14).

9. Mobilier de siège selon l'une des revendications antérieures, **caractérisé en ce que**, sur les faces des plaques vibrantes (6) du côté des surfaces de position est pourvue une couche de gel (9).

10. Mobilier de siège selon l'une des revendications 5 à 9, **caractérisé en ce que**, dans le boîtier (7) du dispositif vibrateur (5) est introduit un matériel vibrant (10), qui est couplé avec les plaques vibrantes (6) et qui peut être amené en état de vibr a-tion par des moyens d'actionnement.

11. Mobilier de siège selon la revendication 10, **caractérisé en ce que**, le matériel vibrant (10) et les plaques vibrantes (6) sont couplés entre eux de sorte que le ra p-port entre les amplitudes de vibration de ceux-ci soit réglable.

12. Mobilier de siège selon la revendication 10 ou 11, **caractérisé en ce que**, l'actionnement du matériel vibrateur (10) et/ou le couplage, entre le matériel vibrant (10) et les plaques vibrantes (6) a lieu par des systèmes à bobine mobile.
